# EUROPEAN PATENT SPECIFICATION

(11) **EP 1 544 058 B1**
(45) Date of publication and mention of the grant of the patent: **04.04.2007**
(21) Application number: 03425801.2
(22) Date of filing: 15.12.2003
(51) Int. Cl.: B60R 21/20

(54) **Airbag assembly for a dashboard of a vehicle**
Airbagmodul für ein Kraftfahrzeug-Armaturenbrett
Assemblage d'un sac gonflable pour tableau de bord de véhicule

(43) Date of publication of application: 22.06.2005
(73) Proprietor: DENSO THERMAL SYSTEMS S.p.A., 10046 Poirino (Torino) (IT); DENSO CORPORATION, Kariya-shi, Aichi-ken, 448-8661 (JP)
(72) Inventor: Cozzani, Massimo c/o Denso Thermal Systems Spa, 10046 Poirino Torino (IT)
(74) Representative: Marchitelli, Mauro

(56) References cited:
- EP-A- 0 958 970
- DE-A- 4 328 721

## Description

The present invention relates to an airbag assembly for a vehicle dashboard, destined to be mounted on the passenger side of a dashboard.

EP-A-958970 discloses a traditional airbag assembly having the feature of the preamble of claim 1 and comprising an airbag module including a folded airbag and an inflating device, a support body or container in which the airbag module is housed and a fastening element for fastening the container to a dashboard support structure.

U.S. Patent Application Publication No. 2002/0043787 discloses an air bag apparatus provided with an inflator for discharging gas, a folded air bag deployed by said discharged gas, a case storing the folded airbag therein, a bracket surrounding a lower side of the inflator, and a fixing metal fitting mounted to a lower side of the bracket and fixed to a vehicle body reinforcing member.

The dashboard of a vehicle is normally provided with a metal support beam fastened to the body of the vehicle. In prior art solutions, the support body of the airbag assembly is fastened to the support beam of the dashboard by means of one or more fastening brackets. The fastening brackets are fastened to the support beam and to the support body of the airbag assembly, for instance, by means of screws.

The object of the present invention is to provide an airbag assembly that is simpler and more economical than prior art solutions and that allows to simplify the mounting of the airbag assembly on the support structure of the vehicle dashboard.

According to the present invention, said object is achieved by a support structure having the characteristics set out in the main claim.

The characteristics and the advantages of the present invention shall become readily apparent in the course of the detailed description that follows, provided purely by way of non limiting example, in which:

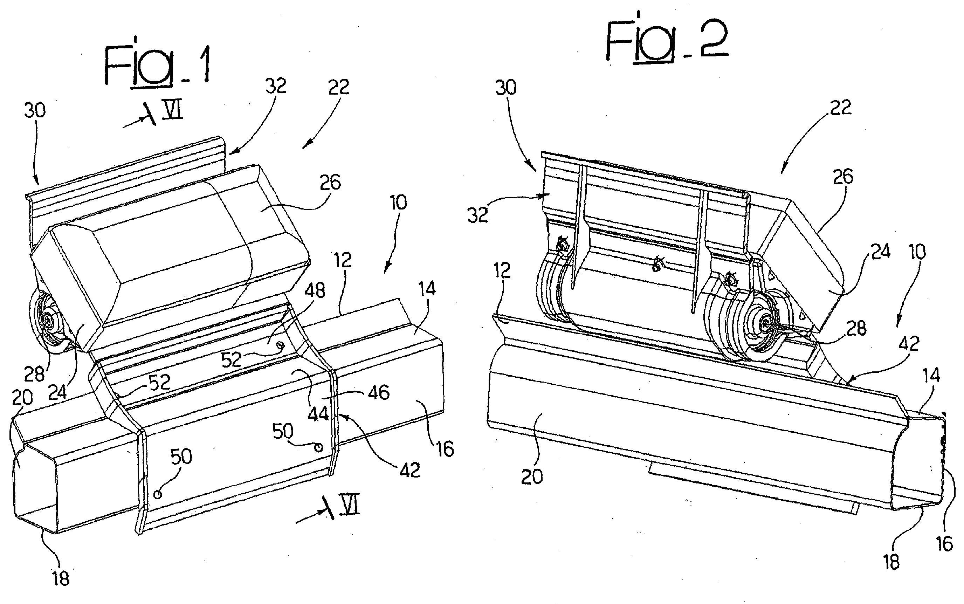

- Figure 1 is a perspective view of an airbag assembly according to the present invention, fastened on a support beam of a vehicle dashboard,
- Figure 2 is a rear perspective view of the airbag assembly of Figure 1,
- Figure 3 is a perspective view of the airbag module,

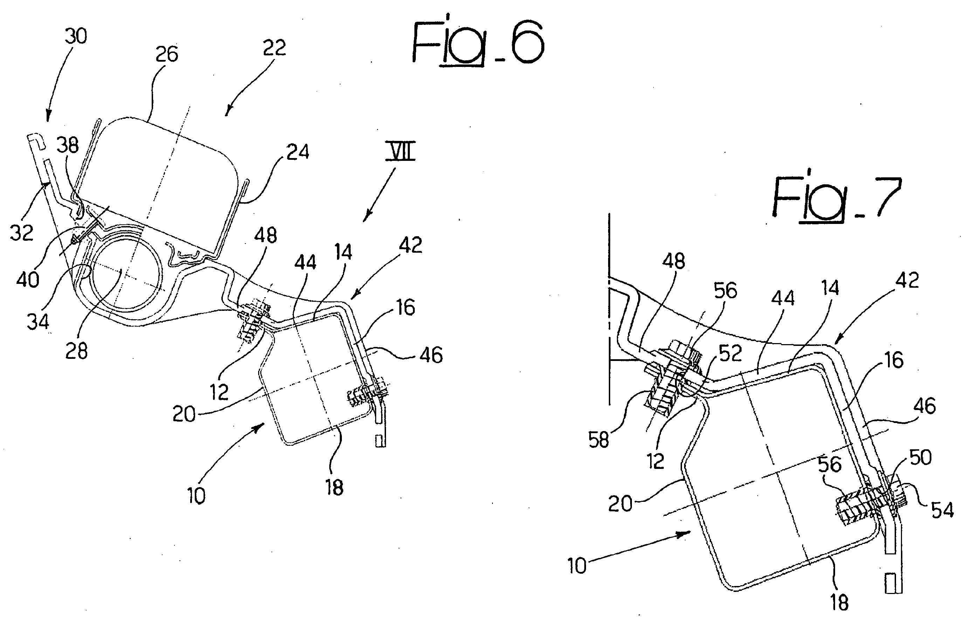

- Figures 4 and 5 are perspective view of the support body with integrated fastening bracket of the airbag assembly according to the present invention,
- Figure 6 is a section according to the line VI-VI of Figure 1, and
- Figure 7 is an enlarged scale section of the part designated by the arrow VII in Figure 6.

With reference to the figures, the number 10 designates a support beam of a vehicle dashboard. In the example shown in the figures, the support beam 10 is made of bent and welded sheet metal. The beam 10 has a cross section with a closed shape and it has a continuous longitudinal rib formed by two longitudinal edge positioned close together and welded to each other by continuous or spot welding.

The support beam 10 has a top wall 14, a front wall 16, a bottom wall 18, and a rear wall 20. The rib 12 is formed by the extensions of the top wall 14 and of the rear wall 20.

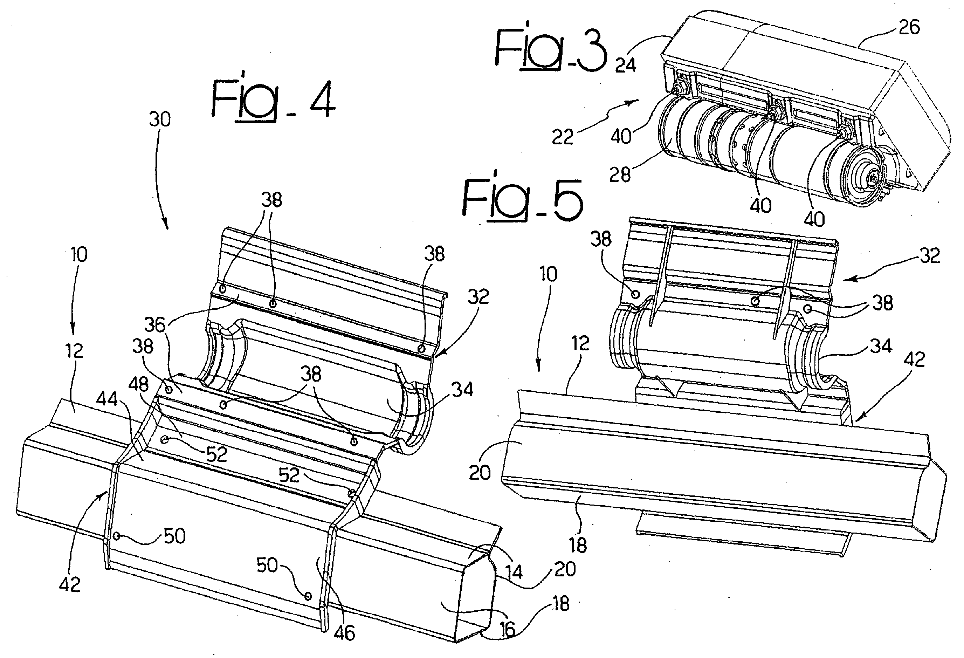

With reference in particular to Figure 3, an airbag module 22 comprises a case 24 containing a folded airbag 26. The module 22 comprises an inflation device 28 fastened on the bottom side of the case 24. The case 24 is generally open on its top side to allow the exit of the airbag 26 when it is inflated by the device 28.

The airbag assembly according to the present invention comprises a monolithic support and fastening bracket 30 made of metallic material, preferably constituted by a casting of a light alloy, such as magnesium.

The monolithic bracket 30 comprises a first portion 32 so shaped as to form a support body for the airbag module 22. The first portion 32 of the bracket 30 comprises a substantially semi-cylindrical seat 34 within which is housed the inflation device 28. The first portion 32 also has two bearing surfaces 36 against which bear reference surfaces of the case 24. The bearing surfaces 36 are provided with through holes 38 within which are engaged fastening elements 40 borne by the case 24.

The first portion 32 of the monolithic bracket 30 performs the same functions that, in a traditional airbag assembly, are performed by the support body within which is housed and fastened the airbag module 22.

The monolithic bracket 30 comprises a second portion 42 so shaped as to allow to fasten the bracket 30 on the support beam 10. The second portion 42 comprises a first bearing wall 44 and a second bearing wall 46 which bear, respectively, on the upper wall 14 and on the front wall 16 of the beam 10. The second portion 42 further comprises a third bearing wall 48 which bears against the rib 12 of the support beam 10. The third bearing wall 48 forms a connecting section between the first portion 32 and the second portion 42 of the monolithic bracket 30.

The second bearing wall 46 and the third bearing wall 48 are provided with respective through holes 50, 52. As Figure 7 shows, the holes 50, 52 are used for fastening the monolithic bracket 30 to the support beam 10 by means of screws 54, 56. The screws 54 extend through the through holes 30 and engage respective nuts 56 fastened on the inner side of the front wall 16. The screws 56 extend through the holes 52 and engage respective nuts 58 fastened on the rib 12.

## Claims

1. An airbag assembly for a vehicle dashboard, comprising:
- an airbag module (22) including a case (24) containing a folded airbag (26) and a device for inflating the airbag (28) fastened on the outer side of the case (24),
- a metallic support body (32) in which the airbag module (22) is housed, and
- a fastening element (42) for fastening the metallic support body to a dashboard support beam (10),
**characterised in that** the assembly comprises a monolithic support and fastening bracket (30) having a first portion (32) shaped with a substantially semi-cylindrical seat (34) within which is housed the inflation device (28) so as to form said metallic support body in which the airbag module (22) is fastened thereto, and a second portion (42) shaped so as to form said fastening element for fastening the metallic support body to the dashboard support beam (10).

2. An airbag assembly as claimed in claim 1, **characterised in that** the first portion (32) of the monolithic bracket (30) and the case (24) of the airbag module (22) are provided with mutually co-operating fastening means (38, 40).

3. An airbag assembly as claimed in claim 1, **characterised in that** the second portion (42) of the monolithic bracket (30) comprises a first, a second and a third bearing surface (44, 46, 48) which bear, respectively, against a top surface (14), against a front surface (16) and against a continuous longitudinal rib (12) of the support beam (10).

4. An airbag assembly as claimed in claim 3, **characterised in that** the second bearing surface (46) and the third bearing surface (48) are provided with through holes (50, 52) for fastening the monolithic bracket (30) to the support beam (10) by means of screws (54, 56).

## Patentansprüche

1. Airbagmodul für ein Kraftfahrzeugarmaturenbrett, umfassend:
- ein Airbagmodul (22), einschließend einen Behälter (24), beinhaltend einen gefalteten Airbag (26) und ein Gerät zum Aufblasen des Airbags (28), befestigt auf der äußeren Seite des Behälters (24),
- ein metallisches Unterstützungsgehäuse (32), in dem das Airbagmodul (22) beherbergt ist, und
- ein Befestigungselement (42) zum Befestigen des metallischen Unterstützungsgehäuses an einem Armaturenbrettunterstützungsträger (10),
**dadurch gekennzeichnet, dass** das Modul umfasst eine monolithische Unterstützungs- und Befestigungsklammer (30) mit einem ersten Abschnitt (32), ausgestaltet mit einem im Wesentlichen halbzylindrischen Sitz (34), innerhalb welchem das Aufblasgerät (28) beherbergt ist, um das metallische Unterstützungsgehäuse zu bilden, in dem das Airbagmodul (22) daran befestigt ist, und einem zweiten Abschnitt (42), ausgestaltet, um das Befestigungselement zum Befestigen des metallischen Unterstützungsgehäuses an dem Armaturenbrettunterstützungsträger (10) zu bilden.

2. Airbagmodul nach Anspruch 1, **dadurch gekennzeichnet, dass** der erste Abschnitt (32) der monolithischen Klammer (30) und der Behälter (24) des Airbagmoduls (22) mit gegenseitig kooperierenden Befestigungsmitteln (38, 40) ausgestattet sind.

3. Airbagmodul nach Anspruch 1, **dadurch gekennzeichnet, dass** der zweite Abschnitt (42) der monolithischen Klammer (30) eine erste, eine zweite und eine dritte Auflagefläche (44, 46, 48) umfasst, die sich jeweils gegen eine obere Oberfläche (14), gegen eine vordere Oberfläche (16) und gegen eine kontinuierliche, longitudinale Rippe (12) des Unterstützungsträgers (10) abstützen.

4. Airbagmodul nach Anspruch 3, **dadurch gekennzeichnet, dass** die zweite Auflagefläche (46) und die dritte Auflagefläche (48) mit durchgehenden Löchern (50, 52) ausgestattet sind zum Befestigen der monolithischen Klammer (30) an dem Unterstützungsträger (10) mittels Schrauben (54, 56).

## Revendications

1. Ensemble à airbag pour un tableau de bord de véhicule, comprenant :
- un module d'airbag (22) qui inclut un boîtier (24) contenant un airbag replié (26) et un dispositif (28) pour gonfler l'airbag fixé sur le côté extérieur du boîtier (24),
- un corps de support métallique (32) dans lequel est logé le module d'airbag (22), et
- un élément de fixation (42) pour fixer le corps de support métallique sur une poutre de support de tableau de bord (10),
**caractérisé en ce que** l'ensemble comprend une platine monolithique (30) de support et de fixation ayant une première portion (32) conformée avec un siège sensiblement (34) sensiblement semi-cylindrique à l'intérieur duquel est logé le dispositif de gonflage (28) de manière à former ledit corps de support métallique dans lequel le module d'airbag (22) est attaché à celui-ci, et une seconde portion (42) conformée de manière à former ledit élément de fixation pour fixer le corps de support métallique sur la poutre de support de tableau de bord (10).

2. Ensemble à airbag selon la revendication 1, **caractérisé en ce que** la première portion (32) de la platine monolithique (30) et le boîtier (24) du module d'airbag (22) sont pourvus de moyens de fixation (38, 40) coopérant mutuellement.

3. Ensemble à airbag selon la revendication 1, **caractérisé en ce que** la seconde portion (42) de la platine monolithique (30) comprend une première, une seconde et une troisième surface de portée (44, 46, 48) qui portent, respectivement, contre une surface supérieure (14), contre une surface frontale (16) et contre une nervure longitudinale continue (12) de la poutre de support (10).

4. Ensemble à airbag selon la revendication 3, **caractérisé en ce que** la seconde surface de portée (46) et la troisième surface de portée (48) sont dotées de trous traversants (50, 52) pour fixer la platine monolithique (30) à la poutre de support (10) au moyen de vis (54, 56).
